# EUROPEAN PATENT SPECIFICATION

(11) **EP 1 465 763 B1**
(45) Date of publication and mention of the grant of the patent: **22.02.2012**
(21) Application number: 03707368.1
(22) Date of filing: 14.01.2003
(51) Int. Cl.: B29C 53/08

(54) **METHOD OF FORMING A HOSE**
VERFAHREN ZUR HERSTELLUNG EINES SCHLAUCHES
PROCEDE DE FORMATION D'UN TUYAU FLEXIBLE

(30) Priority: 15.01.2002 US 348834 P
(43) Date of publication of application: 13.10.2004
(73) Proprietor: Cooper-Standard Automotive, Inc., Novi, MI 48375 (US)
(72) Inventor: WOESSNER, David, Paul, Mount Sterling, KY 40353 (US)
(74) Representative: Shanks, Andrew
(86) International application number: PCT/US2003/000977
(87) International publication number: WO 2003/059601

(56) References cited:
- EP-A- 0 585 855
- GB-A- 1 031 640
- US-A- 3 859 408

## Description

### BACKGROUND OF THE INVENTION

The present invention relates generally to a method of forming a hose to a desired shape by curing a polymeric hose pre-form inside a pre-shaped tube.

Hoses are commonly formed into a desired shape by manually sliding a hose pre-form over a metal mandrel bent to the desired shape. The metal mandrel is usually lubricated to facilitate loading of the metal mandrel in the hose pre-form. The hose is then cured to set the hose to the shape of the metal mandrel. During curing, the metal mandrel supports and retains the hose in the desired shape from the interior surface of the hose. After curing, the metal mandrel is removed. A finishing operation is commonly needed to finish the ends of the hose.

Hoses are also formed by helically winding hose tape around an internal mandrel having a desired shape. The tape is then cured to form the finished hose of the desired shape, and the mandrel is withdrawn.

Another prior method of forming a hose includes confining a hose pre-form inside a spirally shaped confining wall that provides exterior support. The confining wall includes a top half and a lower half. The hose is placed in the lower half of the confining wall, and the top half is then placed over the lower half to trap the hose. The confining wall provides exterior support as the hose is cured. A drawback to this method is that finishing operation is needed because the ends are trapped in the wall and that the confining wall leaves a seam on the hose.

Hoses are also cured while passing through a microwave zone. The outer surface of the tube is simultaneously contacted by a cool stream of fluid that cures the hose. In this method, the outer surface of the tube does not contact any structure or surface.

There are several drawbacks to forming a hose by the mandrel method of the prior art. For one, stress and strain injuries to the operator are possible while sliding of the hose pre-form over the mandrel. This method also requires additional space as there must be room around the parts for the operator's hands during assembly. A separate finishing operation is also required to finish the ends. Finally, this method is expensive and very difficult ergonomically.

US-A-3,859,408 relates to a method for making tubular articles successively from a continuous length of heat setting tubular carcass by inserting a plug in one end portion of the carcass, sealing the end portion, and expanding the end portion against a generally tubular mould whilst simultaneously heat setting the end portion.

### SUMMARY OF THE INVENTION

According to a first aspect of the present invention there is provided a method of forming a hose into a desired shape comprising the steps of:
cutting the hose into a desired length;
drawing said desired length of the hose into a forming tube with a vacuum, wherein said forming tube (14) has an inner surface defining a desired tube shape after the step of cutting the hose;
curing said desired length of the hose into said desired shape; and
removing the hose having said desired shape from said forming tube.

A polymeric hose pre-form is inserted into a pre-shaped tube and is formed into a desired shape. The hose pre-form is first cut to a desired length. A first end of the hose pre-form is inserted into a loading end of the tube. Preferably, the first end is lubricated to assist in loading of the tube. After loading is complete, the outer surface of the hose contacts the inner surface of the tube.

A vacuum endcap is positioned on an opposing vacuum end of the tube. A vacuum applied at the vacuum endcap draws the hose pre-form through the tube until the first end of the hose is flush with the vacuum endcap. A loading endcap is then positioned on the loading end of the tube. Preferably, both ends of the hose are flush with the endcaps and a finishing operation is not needed.

The hose is then cured to maintain the hose in the shape of the tube. After curing, the loading endcap is removed from the tube, and the cured hose is removed from the tube form the loading end.

If the inner diameter of one of the ends of the hose is required to be made larger or flared, a mandrel or plug is inserted into the desired end of the tube prior to curing. The mandrel or plug increases the size of the inner diameter of the hose.

These and other features of the present invention will be best understood from the following specification and drawings.

### BRIEF DESCRIPTION OF THE DRAWINGS

The various features and advantages of the invention will become apparent to those skilled in the art from the following detail description of the currently preferred embodiment. The drawings that accompany the detailed description can be briefly described as follows:
Figure 1 illustrates a schematic perspective view of the hose forming assembly of the present invention; and
Figure 2 illustrates a schematic cross-sectional view of the loading end of the tube after insertion of a mandrel or plug to enlarge the inner diameter of the hose.

### DETAILLED DESCRIPTION OF THE PREFERRED EMBODIMENT

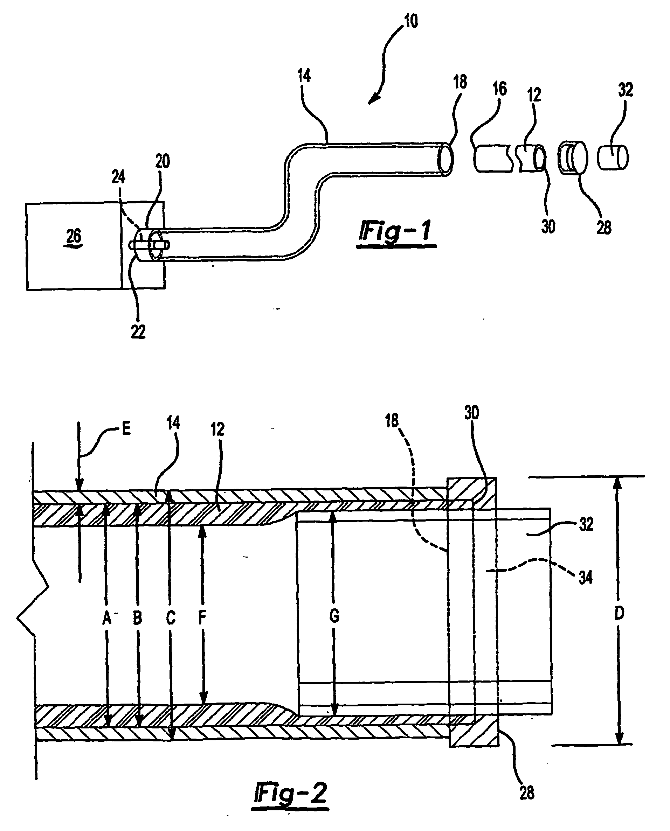

Figure 1 illustrates the hose forming assembly 10 of the present invention. The assembly 10 cures and forms a polymeric hose pre-form 12 into a desired shape. The hose 12 is cured and formed to the desired shape in an external supporting tube 14. The hose 12 can be formed of any polymeric material that cures, such as rubber or plastic. Preferably, the tube 14 is formed of a high temperature plastic, glass, Pyrex, ceramic, or a metal, such as aluminum or stainless steel.

The uncured hose pre-form 12 is first cut to a desired length. A first end 16 of the hose pre-form 12 is inserted into a loading end 18 of the tube 14. During loading of the hose 12, the tube 14 is held stationary by a clamping block. Preferably, the first end 16 is lubricated to assist in loading. As the first end 16 of the hose 12 is pulled through the tube 14, the lubrication spreads over the surface of the hose 12 to further assist in loading. The outer surface of the hose 12 contacts the inner surface of the tube 14 that defines the desired shape when loading is complete.

A vacuum endcap 20 is positioned on an opposing vacuum end 22 of the tube 14. A vent tube 24, such as a roll pin, is inserted into the vacuum endcap 20. The vacuum endcap 20 determines the outer diameter of the hose 12 as the point of contact of the endcap 20 and the hose 12. The vent tube 24 determines the inner diameter of the hose 12 as the point of contact of the vent tube 24 and the hose 12. A vacuum 26 connected to the vent tube 24 applies a vacuum that draws the hose 12 through the entire length of the tube 14 until the first end 16 of the hose 12 is flush with the vacuum endcap 20. The vacuum 26 is stopped once the hose 12 is positioned in the tube 14.

As shown in Figure 2, a loading endcap 28 is positioned on the loading end 18 of the tube 14 after the hose 12 is positioned in the tube 14. The loading endcap 28 can also be employed to determine the inner diameter and outer diameter of the hose 12 at the loading end 18 of the hose 12. The hose 12 is pre-cut to a length such that the second end 30 of the hose 12 is also flush with the loading endcap 28. The tube 14 is then removed from the clamping block.

The hose 12 is then cured to form the hose 12 in the shape defined by the tube 14. As known in the art, the hose 12 is cured at the appropriate time and temperature for the specific hose material utilized. In some examples, the hose 12 is cured by submerging the hose 12 and tube 14 in a fluidised bed of hot fluid (oils, salts, water). The hose 12 can also be cured by hot air, by an electric wrap, or by microwave. During curing, the pair of endcaps 20 and 28 are flush against the first end 16 and opposing second end 30, respectively, of the hose 12. The endcaps 20 and 28 create a flat surface for curing and eliminate the need for a finishing operation.

After curing, the loading endcap 28 is removed from the tube 14, and the cured hose 12 is removed from the tube 14 at the loading end 18. Any suitable pressure may be employed to unload the hose 12 from the tube 14. Preferably, a blowgun is employed at the vacuum end 22 to force the hose 12 out of the tube 14.

The inner diameter of the hose 12 is determined by extrusion. During curing, the hose 12 is subjected to pressure. As the endcap 20 includes a vent tube 24, the pressure on the inside and the outside of the hose 12 is equalized, preventing the hose 12 from collapsing during curing. One of the endcaps 22 and 28 must be allowed to vent equalize the pressure inside the hose 12. In Figure 1, the endcap 22 is vented by the vent tube 24.

Preferably, the tube 14 includes a plurality of bends. After the hose 12 is cured and removed form the tube 14, the hose 11 retains the shape of the plurality of bends of the tube 14.

Preferably, the outer diameter A of the hose 12 is slightly less than the inner diameter B of the tube 14 to ease in loading. In one example, the hose 12 has an outer diameter A of 14.3 mm (9/16 of an inch) and is inserted into a tube 14 having an inner diameter B of 17.5 mm (11/16 of an inch) and an outer diameter C of 19.0 mm (12/16 of an inch). In this example, the endcaps 20 and 28 each have an outer diameter D of 17.5 mm (11/16 of an inch). The wall thickness E of the hose 12 is preferably greater than 1.6 mm (0.065 of an inch) in thickness to prevent the hose 12 from collapsing or tearing when bent to the desired shape. Although these dimensions have been described, it is to be understood that the hose 12 and the tube 14 can have other dimensions.

The inner diameter F of one of the ends 16 and 30 of the hose 12 can be made larger or flared by inserting a plug or a mandrel 32 into the desired end 16 and 30 of the hose 12 to increase the inner diameter F of the hose 12 at the desired end 16 and 30. Figure 2 illustrates a hollow plug 32 inserted into the second end 30 of the hose 12. Although it is illustrated and described that the plug 32 is being inserted into the second end 30 of the hose 12, it is to be understood that a plug 32 can be inserted into the end 16 or into both ends 16 and 30. The plug 32 has a given length and expands the inner diameter of the hose 12 to an enlarged inner diameter G at the points where the plug 32 contacts the inner diameter F of the hose 12. As shown, the loading endcap 28 includes a hole 34 to allow for insertion of the plug 32. The length of the plug 32 also depends on the hose 12 requirements and customers specifications. Curing the hose 12 retains the flared shape of the end 30.

The hollow plug 32 allows the inside G of the hose 12 to vent, preventing the collapsing of the hose 12 during curing due to the pressure on the outside of the hose 12. By providing a vent, the atmospheric pressure on the inner surface and the outer surface of the hose 12 can be equalized. If a plug 24 and 32 is employed at both ends 20 and 30 of the hose 12, the plugs 24 and 32 must be hollow to allow the inside of the hose 12 to vent. If only one plug 32 is employed, the plug 32 can be solid, or a mandrel, as the other end of the hose 12 is open.

Although a hose pre-form 12 has been illustrated and described, it is to be understood that other pre-forms can be utilized. The pre-form 14 can also be a fuel line, a synthetic brake line, a reinforced hose, a non-reinforced hose, a seal or a gasket, either solid, hollow, dense and sponge.

By employing the hose forming assembly 10 of the present invention, the hose pre-form 12 can be easily loaded in the pre-shaped tube 14, reducing operator injuries. Trimming is also not required as the ends 16 and 30 are finished during the curing process. Additionally, less space is required as the assembly 10 eliminates the need for spacial considerations around the parts for the operator's hands. The tubes 14 are also stackable during the curing process, reducing space and allowing for more hoses 12 to be cured in a given area. There is also fewer external markings on the hoses 12. Finally, the assembly 10 is more economic and ergonomic than the prior art methods.

The foregoing description is only exemplary of the principles of the invention. The preferred embodiments of this invention have been disclosed, however, so that one of ordinary skill in the art would recognize that certain modifications would come within the scope of this invention as defined by the appended claims.

## Claims

1. A method of forming a hose (12) into a desired shape comprising the steps of:
cutting the hose (12) into a desired length;
drawing said desired length of the hose (12) into a forming tube (14) with a vacuum, wherein said forming tube (14) has an inner surface defining a desired tube shape after the step of cutting the hose (12);
curing said desired length of the hose (12) into said desired shape; and
removing the hose (12) having said desired shape from said forming tube (14).

2. The method as recited in claim 1, further comprising the step of holding said forming tube stationary.

3. The method as recited in claim 2, wherein a clamping block holds said forming tube (14) stationary.

4. The method as recited in claim 1, further comprising the step of lubricating the hose (12).

5. The method as recited in claim 1, wherein said desired length of the hose (12) includes a first end (16) and an opposing second end (30) and said forming tube (14) includes a loading end (18) and an opposing vacuum end (22), and the step of drawing the hose (12) includes inserting said first end (16) of the hose (12) into said loading end (18) of said forming tube (14).

6. The method as recited in claim 5, wherein said vacuum is applied to said vacuum end (22) of said tube (14).

7. The method as recited in claim 5, wherein the step of removing the hose (12) includes applying pressure to said vacuum end (22) of said forming tube (14).

8. The method as recited in claim 5, further comprising the steps of positioning a vacuum endcap (20) on said vacuum end (22) of said forming tube (14) and positioning a loading endcap (28) on said loading end (18) of said forming tube (14).

9. The method as recited in claim 8, wherein said first end (16) of the hose (12) is flush with said vacuum endcap (20) and said second end (30) of the hose (12) is flush with said loading endcap (28).

10. The method as recited in claim 9, further including the step of curing said first end (16) and said second end (30) against said vacuum endcap (20) and said loading endcap (28), respectively, to finish said first end (16) and said second end (30) of the hose (12).

11. The method as recited in claim 1, wherein the hose (12) includes a first end (16) and an opposing second end (30), and the method further includes the step of flaring at least one of said first end (16) and said second end (30) of the hose (12).

12. The method as recited in claim 11, wherein the step of flaring said at least one of said first end (16) and said second end (30) of the hose (12) includes inserting a plug (32) into said at least one of said first end (16) and said second end (30) of the hose (12), and said plug (32) has an outer diameter greater than an inner diameter of the hose (12).

13. The method as recited in claim 1, wherein the hose (12) is a polymer.

14. The method as recited in claim 1, wherein said forming tube (14) is one of plastic, glass, Pyrex, ceramic, and metal.

15. The method as recited in claim 1, wherein the step of curing the hose (12) includes submerging the hose (12) and said forming tube (14) in a hot fluid.

16. The method as recited in claim 1, wherein the step of curing the hose (12) includes employing an electric wrap.

17. The method as recited in claim 1, wherein the step of curing the hose (12) includes microwaving.

18. A method as recited in claim 1, wherein the hose (12) includes a first end (16) and an opposing second end (30); and the forming tube (14) includes a loading end (18) and an opposing vacuum end (22);
and the method further comprises:
positioning a vacuum endcap (20) on said vacuum end (22) of said forming tube (14); and
positioning a loading endcap (28) on said loading end (18) of said forming tube (14).

19. The method as recited in claim 18, further comprising the step of lubricating the hose (12).

20. The method as recited in claim 18, wherein the step of drawing includes inserting said first end (16) of the hose (12) into said loading end (18) of said forming tube (14).

21. The method as recited in claim 20, wherein said vacuum is applied to said vacuum end (22) of said tube (14).

22. The method as recited in claim 18, wherein the step of removing the hose (12) includes applying pressure to said vacuum end (22) of said forming tube (14).

23. The method as recited in claim 18, further including the step of curing said first end (16) and said second end (30) against said vacuum endcap (20) and said loading endcap (28), respectively, to finish said first end (16) and said second end (30) of the hose (12).

24. The method as recited in claim 18, wherein said first end (16) of the hose (12) is flush with said vacuum endcap (20) and said second end (30) of the hose (12) is flush with said loading endcap (28).

25. The method as recited in claim 18, further including the step of flaring at least one of said first end (16) and said second end (30) of the hose (12).

## Patentansprüche

1. Verfahren zum Formen eines Schlauches (12) zu einer gewünschten Form, das die folgenden Schritte aufweist:
Schneiden des Schlauches (12) zu einer gewünschten Länge;
Einziehen der gewünschten Länge des Schlauches (12) in ein Formgebungsrohr (14) mit einem Vakuum, wobei das Formgebungsrohr (14) eine Innenfläche aufweist, die eine gewünschte Rohrform nach dem Schritt des Schneidens des Schlauches (12) definiert;
Aushärten der gewünschten Länge des Schlauches (12) zu der gewünschten Form; und
Herausnehmen des Schlauches (12) mit der gewünschten Form aus dem Formgebungsrohr (14).

2. Verfahren nach Anspruch 1, das außerdem den Schritt des stationären Haltens des Formgebungsrohres aufweist.

3. Verfahren nach Anspruch 2, bei dem ein Klemmblock das Formgebungsrohr (14) stationär hält.

4. Verfahren nach Anspruch 1, das außerdem den Schritt des Schmierens des Schlauches (12) aufweist.

5. Verfahren nach Anspruch 1, bei dem die gewünschte Länge des Schlauches (12) ein erstes Ende (16) und ein entgegengesetztes zweites Ende (30) umfasst, und wobei das Formgebungsrohr (14) ein Einführende (18) und ein entgegengesetztes Vakuumende (22) umfasst, und bei dem der Schritt des Einziehens des Schlauches (12) das Einsetzen des ersten Endes (16) des Schlauches (12) in das Einführende (18) des Formgebungsrohres (14) umfasst.

6. Verfahren nach Anspruch 5, bei dem das Vakuum am Vakuumende (22) des Rohres (14) angewandt wird.

7. Verfahren nach Anspruch 5, bei dem der Schritt des Herausnehmens des Schlauches (12) das Anwenden von Druck am Vakuumende (22) des Formgebungsrohres (14) umfasst.

8. Verfahren nach Anspruch 5, das außerdem die folgenden Schritte aufweist: Positionieren einer Vakuumendkappe (20) am Vakuumende (22) des Formgebungsrohres (14); und Positionieren einer Einführendkappe (28) am Einführende (18) des Formgebungsrohres (14).

9. Verfahren nach Anspruch 8, bei dem das erste Ende (16) des Schlauches (12) mit der Vakuumendkappe (20) bündig ist, und bei dem das zweite Ende (30) des Schlauches (12) mit der Einführendkappe (28) bündig ist.

10. Verfahren nach Anspruch 9, das außerdem den Schritt des Aushärtens des ersten Endes (16) und des zweiten Endes (30) gegen jeweils die Vakuumendkappe (20) und die Einführendkappe (28) umfasst, um das erste Ende (16) und das zweite Ende (30) des Schlauches (12) fertig zu stellen.

11. Verfahren nach Anspruch 1, bei dem der Schlauch (12) ein erstes Ende (16) und ein entgegengesetztes zweites Ende (30) umfasst, und bei dem das Verfahren außerdem den Schritt des Aufweitens von mindestens einem von erstem Ende (16) und zweitem Ende (30) des Schlauches (12) umfasst.

12. Verfahren nach Anspruch 11, bei dem der Schritt des Aufweitens von mindestens einem von erstem Ende (16) und zweitem Ende (30) des Schlauches (12) das Einsetzen eines Stopfens (32) in mindestens eines von erstem Ende (16) und zweitem Ende (30) des Schlauches (12) umfasst, und wobei der Stopfen (32) einen Außendurchmesser aufweist, der größer ist als ein Innendurchmesser des Schlauches (12).

13. Verfahren nach Anspruch 1, bei dem der Schlauch (12) ein Polymer ist.

14. Verfahren nach Anspruch 1, bei dem das Formgebungsrohr (14) aus einem von Kunststoff, Glas, Pyrex, Keramik und Metall besteht.

15. Verfahren nach Anspruch 1, bei dem der Schritt des Aushärtens des Schlauches (12) das Tauchen des Schlauches (12) und des Formgebungsrohres (14) in einem heißen Fluid umfasst.

16. Verfahren nach Anspruch 1, bei dem der Schritt des Aushärtens des Schlauches (12) das Anwenden einer elektrischen Umhüllung umfasst.

17. Verfahren nach Anspruch 1, bei dem der Schritt des Aushärtens des Schlauches (12) eine Mikrowellenbehandlung umfasst.

18. Verfahren nach Anspruch 1, bei dem der Schlauch (12) ein erstes Ende (16) und ein entgegengesetztes zweites Ende (30) umfasst, und bei dem das Formgebungsrohr (14) ein Einführende (18) und ein entgegengesetztes Vakuumende (22) umfasst; und
wobei das Verfahren außerdem die folgenden Schritte aufweist:
Positionieren einer Vakuumendkappe (20) am Vakuumende (22) des Formgebungsrohres (14); und
Positionieren einer Einführendkappe (28) am Einführende (18) des Formgebungsrohres (14).

19. Verfahren nach Anspruch 18, das außerdem den Schritt des Schmierens des Schlauches (12) aufweist.

20. Verfahren nach Anspruch 18, bei dem der Schritt des Einziehens das Einsetzen des ersten Endes (16) des Schlauches (12) in das Einführende (18) des Formgebungsrohres (14) umfasst.

21. Verfahren nach Anspruch 20, bei dem das Vakuum am Vakuumende (22) des Rohres (14) angewandt wird.

22. Verfahren nach Anspruch 18, bei dem der Schritt des Herausnehmens des Schlauches (12) das Anwenden von Druck am Vakuumende (22) des Formgebungsrohres (14) umfasst.

23. Verfahren nach Anspruch 18, das außerdem den Schritt des Aushärtens des ersten Endes (16) und des zweiten Endes (30) gegen jeweils die Vakuumendkappe (20) und die Einführendkappe (28) umfasst, um das erste Ende (16) und das zweite Ende (30) des Schlauches (12) fertig zu stellen.

24. Verfahren nach Anspruch 18, bei dem das erste Ende (16) des Schlauches (12) mit der Vakuumendkappe (20) bündig ist, und bei dem das zweite Ende (30) des Schlauches (12) mit der Einführendkappe (28) bündig ist.

25. Verfahren nach Anspruch 18, das außerdem den Schritt des Aufweitens von mindestens einem von erstem Ende (16) und zweitem Ende (30) des Schlauches (12) umfasst.

## Revendications

1. Procédé de formation d'un tuyau flexible (12) en une forme voulue, comprenant les étapes ci-dessous :
découpe du tuyau flexible (12) à la longueur voulue ;
insertion par aspiration de ladite longueur voulue du tuyau flexible (12) dans un tube de formage (14) par l'intermédiaire d'un vide, ledit tube de formage (14) comportant une surface interne définissant une forme de tube voulue après l'étape de découpe du tuyau flexible (12) ;
vulcanisation de ladite longueur voulue du tuyau flexible (12) en ladite forme voulue ; et
retrait du tuyau flexible (12) ayant ladite forme voulue dudit tube de formage (14).

2. Procédé selon la revendication 1, comprenant en outre l'étape de maintien dudit tube de formage dans un état stationnaire.

3. Procédé selon la revendication 2, dans lequel un bloc de serrage maintient ledit tube de formage (14) dans un état stationnaire.

4. Procédé selon la revendication 1, comprenant en outre l'étape de lubrification du tuyau flexible (12).

5. Procédé selon la revendication 1, dans lequel ladite longueur voulue du tuyau flexible (12) englobe une première extrémité (16) et une deuxième extrémité opposée (30), ledit tube de formage (14) englobant une extrémité de chargement (18) et une extrémité à vide opposée (22), l'étape d'insertion par aspiration du tuyau flexible (12) englobant l'insertion de ladite première extrémité (16) du tuyau flexible (12) dans ladite extrémité de chargement (18) dudit tube de formage (14).

6. Procédé selon la revendication 5, dans lequel ledit vide est appliqué à ladite extrémité à vide (22) dudit tube (14).

7. Procédé selon la revendication 5, dans lequel l'étape de retrait du tuyau flexible (12) englobe l'application d'une pression à ladite extrémité à vide (22) dudit tube de formage (14).

8. Procédé selon la revendication 5, comprenant en outre les étapes de positionnement d'un capuchon d'extrémité à vide (20) sur ladite extrémité à vide (22) dudit tube de formage (14) et de positionnement d'un capuchon d'extrémité de chargement (28) sur ladite extrémité de chargement (18) dudit tube de formage (14).

9. Procédé selon la revendication 8, dans lequel ladite première extrémité (16) du tuyau flexible (12) affleure ledit capuchon d'extrémité à vide (20), ladite deuxième extrémité (30) du tuyau flexible (12) affleurant ledit capuchon d'extrémité de chargement (28).

10. Procédé selon la revendication 9, englobant en outre l'étape de vulcanisation de ladite première extrémité (16) et de ladite deuxième extrémité (30), respectivement contre ledit capuchon d'extrémité à vide (20) et ledit capuchon d'extrémité de chargement (28), pour finir ladite première extrémité (16) et ladite deuxième extrémité (30) du tuyau flexible (12).

11. Procédé selon la revendication 1, dans lequel le tuyau flexible (12) englobe une première extrémité (16) et une deuxième extrémité opposée (30), le procédé englobant en outre l'étape d'évasement d'au moins une extrémité, ladite première extrémité (16) ou ladite deuxième extrémité (30) du tuyau flexible (12).

12. Procédé selon la revendication 11, dans lequel l'étape d'évasement de ladite au moins une extrémité, ladite première extrémité (16) ou ladite deuxième extrémité (30) du tuyau flexible, englobe l'insertion d'un bouchon (32) dans ladite au moins une extrémité, ladite première extrémité (16) ou ladite deuxième extrémité (30) du tuyau flexible (12), ledit bouchon (32) ayant un diamètre extérieur supérieur à un diamètre intérieur du tuyau flexible (12).

13. Procédé selon la revendication 1, dans lequel le tuyau (12) est un polymère.

14. Procédé selon la revendication 1, dans lequel ledit tube de formage (14) est composé de plastique, de verre, de Pyrex, de céramique ou de métal.

15. Procédé selon la revendication 1, dans lequel l'étape de vulcanisation du tuyau flexible (12) englobe l'immersion du tuyau flexible (12) et dudit tube de formage (14) dans un fluide chaud.

16. Procédé selon la revendication 1, dans lequel l'étape de vulcanisation du tuyau flexible (12) englobe l'utilisation d'une enveloppe électrique.

17. Procédé selon la revendication 1, dans lequel l'étape de vulcanisation du tuyau flexible (12) englobe l'application de micro-ondes.

18. Procédé selon la revendication 1, dans lequel le tuyau flexible (12) englobe une première extrémité (16) et une deuxième extrémité opposée (30) ; le tube de formage (14) englobant une extrémité de chargement (18) et une extrémité à vide opposée (22) ;
le procédé comprenant en outre les étapes ci-dessous :
positionnement d'un capuchon d'extrémité à vide (20) sur ladite extrémité à vide (22) dudit tube de formage (14) ; et
positionnement d'un capuchon d'extrémité de chargement (28) sur ladite extrémité de chargement (18) dudit tube de formage (14).

19. Procédé selon la revendication 18, comprenant en outre l'étape de lubrification du tuyau flexible (12).

20. Procédé selon la revendication 18, dans lequel l'étape d'aspiration englobe l'insertion de ladite première extrémité (16) du tuyau flexible (12) dans ladite extrémité de chargement (18) dudit tube de formage (14).

21. Procédé selon la revendication 20, dans lequel ledit vide est appliqué à ladite extrémité à vide (22) dudit tube (14).

22. Procédé selon la revendication 18, dans lequel l'étape de retrait du tuyau flexible (12) englobe l'application de pression à ladite extrémité à vide (22) dudit tube de formage (14).

23. Procédé selon la revendication 18, englobant en outre l'étape de vulcanisation de ladite première extrémité (16) et de ladite deuxième extrémité (30), respectivement contre ledit capuchon d'extrémité à vide (20) et ledit capuchon d'extrémité de chargement (28), pour finir ladite première extrémité (16) et ladite deuxième extrémité (30) du tuyau flexible (12).

24. Procédé selon la revendication 18, dans lequel ladite première extrémité (16) du tuyau flexible (12) affleure ledit capuchon d'extrémité à vide (20), ladite deuxième extrémité (30) du tuyau à vide (12) affleurant ledit capuchon d'extrémité de chargement (28).

25. Procédé selon la revendication 18, englobant en outre l'étape d'évasement d'au moins une extrémité, ladite première extrémité (16) ou ladite deuxième extrémité (30) du tuyau flexible (12).
